Europäisches Patentamt

(19) European Patent Office    (11) Publication number: **0 032 439**

Office européen des brevets    **B1**

(12) **EUROPEAN PATENT SPECIFICATION**

(45) Date of publication of patent specification: **03.10.84**    (51) Int. Cl.³: **F 16 B 45/00, F 16 G 11/14**

(21) Application number: **81300090.8**

(22) Date of filing: **09.01.81**

(54) Improvements relating to lever yokes.

(30) Priority: **11.01.80 US 111351**

(43) Date of publication of application:
**22.07.81 Bulletin 81/29**

(45) Publication of the grant of the patent:
**03.10.84 Bulletin 84/40**

(84) Designated Contracting States:
**DE FR GB**

(56) References cited:
**AT-B- 187 818**
**DE-A-2 011 889**
**DE-B-2 139 871**
**DE-U-6 918 160**
**FR-A- 644 997**
**FR-A- 794 282**
**FR-A- 969 870**
**US-A-1 519 467**
**US-A-1 619 517**
**US-A-1 764 227**
**US-A-1 835 359**

(73) Proprietor: **Acco Babcock Inc.**
**425 Post Road**
**Fairfield Connecticut 06430 (US)**

(72) Inventor: **Sevrence, Warren Edward**
**53S Crestview Drive**
**Adrian Michigan 49311 (US)**

(74) Representative: **Lewis, David Overington**
**c/o Babcock International Ltd. Cleveland House**
**19 St. James's Square**
**London SW1Y 4LN (GB)**

(56) References cited:
**US-A-2 643 446**
**US-A-3 238 585**
**US-A-3 288 408**
**US-A-3 556 457**

**DIN 9870, p 251 and 262**

Courier Press, Leamington Spa, England.

## Description

This invention relates to lever yokes and more particularly to a lever yoke end attached to a control cable to engage a pivotal lever arm, and to a method of manufacturing lever yokes.

In the manufacture of chains, and chain links, it is known from U.S. patent specification No. 1835359 to produce a non-demountable chain having links formed from a single unitary sheet member having a pair of identical tongues formed within the body of the link and bent outwardly toward the outer edge of the link to form pintles. The portion of the unitary sheet member between the pintles is subsequently severed and removed.

In the manufacture of electrical connectors it is known from U.S. patent specification No. 2643446 to manufacture electrical terminal connectors from a metal strip which is fed through a number of successive operating stations at which stations various operations including blanking, piercing and brazing are carried out on the metal strip.

Previously lever yokes have been manufactured by forging metal and have included a yoke end having a slot with a curved surface at one end. The lever yoke of the present invention includes a slot having an end portion which includes a section of constant radius which acts as a lever arm engaging surface and which enables smooth engagement between the lever yoke end and a lever arm through varying degrees of pivotal movement of the lever arm.

According to the invention there is provided a lever yoke including a flat body piece having a tab cut from the inner area of the body piece to form a longitudinally extending rectangular slot in the body piece with the tab being bent to one side of said body piece characterized in that a face of the tab (8) is spaced from and substantially parallel to a web of said body piece and so that a surface of the tab adjacent an end of the slot and facing the slot forms a circular lever arm engaging surface having a section of constant radius with the longitudinal axis of the slot bisecting said tab and a cylindrical portion adjoining the flat body piece at an end of the slot remote from the tab where the circumference of the inner surface of the cylindrical portion is greater than the width of the slot and where the cylindrical portion extends parallel to the longitudinally extending slot.

According to the invention there is also provided a method of manufacturing a lever yoke from a flat strip including the step of cutting said strip into a plurality of flat blanks including flat body pieces each connected at one end to a central part of the strip, and the step of cutting a tab from the end of each body piece connected to the central part of the strip characterized in that the method further includes the step of progressively bending each tab towards the centre part of the strip until a face of the tab is parallel to and spaced from a face of the body piece and so as to form a longitudinally extending slot in the shape of a quadrangle in the body piece with the longitudinal axis of the slot bisecting said tab and with a face of the tab (8) forming a circular lever arm engaging surface adjacent a narrow end of the slot having a section of constant radius, and the step of cutting each body piece from the central part of the strip.

The invention will now be described, by way of example, with reference to the accompanying, partly diagrammatic, drawings in which:—

Figure 1 is a perspective view of a stamped-out lever yoke, attached to an end portion of control cable;

Figure 2 is a partly sectional side elevation of the stamped-out yoke engaged with a portion of a lever arm;

Figure 3 is a series of plan views at various stages in the stamping-out of the yoke from a flat strip, and

Figure 4 is a series of views from below at various stages in the stamping-out of the yoke.

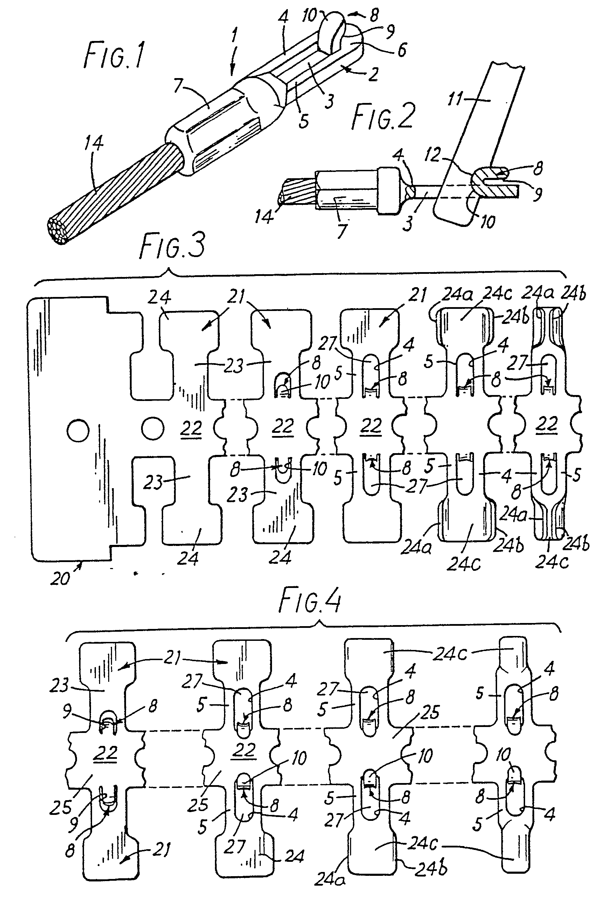

With reference to Figures 1 and 2 of the drawings, a stamped-out yoke 1 includes an elongated flat portion 2 having therein a slot 3 which is enclosed by a pair of parallel limbs 4, 5 of rectangular cross-section, connected at an end portion thereof by a web 6. The ends of the limbs 4, 5 remote from the web 6 extend into a cylindrical portion 7. The circumference of the inner surface of the portion 7 is greater than the width of the slot 3.

Extending away from the slot 3 in the direction of the web 6 at an end of the slot 3 remote from the cylindrical portion 7 is a tab 8. The tab 8 is formed during cutting of a portion of the slot 3 and is bent such that an inner face 9 thereof is superimposed and spaced apart from a surface of the web 6. An outer face 10 of the tab 8 has at a region adjoining the end of the slot 3 adjacent to the web 6 a part cylindrical section which forms a lever engaging surface, capable of engaging a lever arm 11 which has an arcuate section groove 12 complementary in shape to the part cylindrical section of the lever engaging surface. Since the arcuate section groove 12 of the lever arm compliments the part cylindrical section forming the lever engaging surface there will be continual even engagement between the arcuate section groove 12 of the lever arm and the lever engaging surface throughout a limited range of pivotal movement of the lever arm 11.

The cylindrical portion 7 is engaged onto an end portion of a control cable 14 to form a permanent connection between the stamped-out yoke 1 and the control cable 14.

With reference to Figures 3 and 4, the stamped out yoke 1 is formed from a flat strip 20 by cutting a plurality of flat blanks 21 from the flat stamp 20 such that the flat blanks 21 are arranged symmetrically about a central region 22 from which a strip portion 23 of the blank 21 (corresponding to the elongated portion 2 of the yoke) extends into a flap portion 24.

A tab 8 is then cut in each strip portion 23 adjacent the central region 22. The tabs 8 are then progressively bent at respective bending stations such that the face 9 of each tab is as shown in Figure 4, moved towards a face 25 of the central region 22. At the final bending station the face 9 of each tab 8 is positioned parallel to and spaced apart from the face 25 of the central region 22.

The cutting of each of the tabs 8 produces a slot 27 in the strip portion 23 of each of the blanks 21. Each slot 27 is then enlarged to accommodate the lever arm 11 by a cuting tool which extends the areas of each slot 27 in the direction of the flap portion 24, thereby forming the pair of parallel spaced-apart limbs 4 and 5.

The flap portions 24 of the blanks 21 are then progressively bent at respective forming stations such that the symmetrically opposed outer edges 24a, 24b are curved towards each other whilst an area 24c intermediate the outer edges 24a, 24b is depressed away from the edges 24a, 24b to form the cylindrical portion 7.

The end of each of the strip portions 23 which merges with the central region 22 is then cut to form the web 6 which connects the two limbs 4 and 5 together and, at the same time, sever the stamped-out yoke 1 from the flat strip 20.

The outer edges 24a, 24b of the cylindrical portion are then brazed together and the stamped yoke end is hardened preparatory to being swaged on to a control cable 14 as shown in Figures 1 and 2.

It will be appreciated that the stamped yoke end may be constructed to include an elongated portion having tabs cut therefrom to form a single slot with a tab at each end of the slot. The tabs are each bent so that an inner face of each tab is substantially adjacent a surface of the elongated portion with an outer surface of each of the tabs including a part cylindrical section forming a lever engaging surface. Such a stamped yoke end may be used to act as a push-pull linkage. Alternatively, with such an arrangement of tabs positioned at both ends of the slot, the cylindrical portion 7 may be omitted and the stamping utilised as a link yoke connecting a pair of levers each formed with an arcuate section groove each co-operating with a part cylindrical section on the respective tab.

## Claims

1. A lever yoke including a flat body piece (2) having a tab (8) cut from the inner area of the body piece (2) to form a longitudinally extending rectangular slot (3) in the body piece (2) with the tab (8) being bent to one side of said body piece (2), characterized in that a face (9) of the tab (8) is spaced from and substantially parallel to a web (6) of said body piece (2) and so that a surface (10) of the tab adjacent a narrow end of the slot facing the slot forms a circular lever arm engaging surface having a section of constant radius with the longitudinal axis of the slot bisecting said tab (8), and a cylindrical portion (7) adjoining the flat body piece (2) at an end of the slot remote from the tab (8) where the circumference of the inner surface of the cylindrical portion (7) is greater than the width of the slot (3) and where the cylindrical portion (7) extends parallel to the longitudinally extending slot (3).

2. A method of manufacturing a lever yoke from a flat strip (20) including the step of cutting said strip (20) into a plurality of flat blanks (21) including flat body pieces (23) each connected at one end to a central part (22) of the strip (20), and the step of cutting a tab (8) from the end of each body piece (23) connected to the central part (22) of the strip (20), characterized in that the method further includes the step of progressively bending each tab (8) towards the centre part (22) of the strip (20) until a face (9) of the tab (8) is parallel to and spaced from a face (25) of the body piece (23) and so as to form a longitudinally extending slot (27) in the shape of a quadrangle in the body piece (23) with the longitudinal axis of the slot bisecting said tab (8) and with a face (10) of the tab (8) forming a circular lever arm engaging surface adjacent a narrow end of the slot (27) having a section of constant radius, and the step of cutting each body piece (23) from the central part (22) of the strip (20).

3. A method of manufacturing a lever yoke as claimed in claim 2, characterized in that the method includes the additional step of enlarging each slot (27) by cutting away a portion of each body piece (23) opposite a tab (8) to form an elongated slot in each body piece (23) adapted to receive a lever arm.

4. A method of manufacturing a lever yoke as claimed in claim 3, characterized in that the method includes the additional step of progressively bending the end (24) of each blank opposite the end of the body piece (23) connected to the centre part (22) of the strip (20) to form a cylindrical portion (7) adapted to be connected to the end of a cable.

## Revendications

1. Etrier de réception de levier comportant une pièce de corps plate (2) présentant une patte (8) découpée dans la zone intérieure de la pièce de corps (2) pour définir une fente rectangulaire (3) s'étendant longitudinalement dans la pièce de corps (2), la patte (8) étant coudée vers un côté de ladite pièce de corps (2), caractérisé en ce qu'une face (9) de la patte (8) et espacée de, et sensiblement parallèle à, une anse (6) de ladite pièce de corps (2) et en sorte qu'une surface (10) de la patte voisine d'une extrémité étroite de la fente regardant vers la fente forme une surface circulaire d'appui de bras de levier ayant une section à rayon constant, l'axe longitudinalement de la fente coupant ladite patte (8), et une partie cylindrique (7) attenant à la pièce de corps plate (2) à une extrémité de la fente distante de la patte (8), la circonférence de la surface intérieure de la partie cylindrique (7) étant plus grande que la largeur de la fente (3) et la partie cylindrique (7) s'étendant parallèlement à la fente s'étendant longitudinalement (3).

2. Procédé de fabrication d'un étrier de réception de levier à partir d'une bande plate (20) comportant l'opération de découpage de ladite bande (20) en une pluralité d'ébauches plates (21) comportant des pièces de corps plates (23) reliées chacune par une extrémité à une partie médiane (22) de la bande (20), et l'opération de découpe d'une patte (8) dans l'extrémité de chaque pièce de corps (23) reliée à la partie médiane (22) de la bande (20), caractérisé en ce qu'il comporte encore l'opération consistant à couder progressivement chaque patte (8) vers la partie médiane (22) de la bande (20) jusqu'à ce qu'une face (9) de la patte (8) soit parallèle à, et espacée de, une face (25) de la pièce de corps (23) et de façon à ménager une fente s'étendant longitudinalement (27) en forme de quadrilatère dans la pièce de corps (23), l'axe longitudinal de la fente coupant ladite patte (8) et une face (10) de la patte (8) formant près d'une extrémité étroite de la fente (27) une surface circulaire d'appui de bras de levier ayant une section à rayon constant, et l'opération consistant à détacher par coupe chaque pièce de corps (23) de la partie médiane (22) de la bande (20).

3. Procédé de fabrication d'un étrier de réception de levier selon la revendication 2, caractérisé en ce qu'il comporté l'opération supplémentaire consistant à élargir chaque fente (27) en retranchant une partie de chaque pièce de corps (23) opposée à une patte (8) pour ménager dans chaque pièce de corps (23) une fente oblongue propre à recevoir un bras de levier.

4. Procédé de fabrication d'un étrier de réception de levier selon la revendication 3, caractérisé en ce qu'il comporte l'opération supplémentaire consistant à couder progressivement l'extrémité (24) de chaque ébauche opposée à l'extrémité de la pièce de corps (23) reliée à la partie médiane (22) de la bande (20) pour former une partie cylindrique (7) propre à être reliée à l'extrémité d'un câble.

**Patentansprüche**

1. Widerlager für einen Hebel, enthaltend einen flachen Körper (2) mit einer Zunge (8), die aus dem Innenbereich des flachen Körpers (2) zur Bildung eines sich längs erstreckenden, rechteckförmigen Schlitzes (3) gestanzt und auf eine Seite des flachen Körpers (2) gebogen ist, dadurch gekennzeichnet, daß eine Seite (9) der Zunge (8) im Abstand und im wesentlichen parallel zu einem Steg (6) des flachen Körpers (2) angeordnet ist, so daß eine Oberfläche (10) der Zunge nahe eines schmalen Endes des Schlitzes und den Schlitz begrenzend eine gekrümmte Widerlagerfläche für einen Hebelarm bildet, die einen Bereich mit konstantem Radius zur die Zunge schneidenden Längsachse des Schlitzes aufweist, und daß ein zylindrisches Teil (7) dem flachen Körper (2) am Ende des Schlitzes entfernt von der Zunge (8) benachbart ist, wobei der Umfang der Innenoberfläche des zylindrischen Teils (7) größer als die Breite des Schlitzes (3) ist und das zylindrische Teil (7) sich parallel zu dem sich längs erstreckenden Schlitz (3) erstreckt.

2. Verfahren zur Herstellung eines Widerlagers für einen Hebel aus einem Blechstreifen (20) mit folgenden Schritten:

der Blechstreifen (20) wird zu einer Mehrzahl von flachen Werkstücken (21) gestanzt, die jeweils flache Körperteile (23) enthalten, die jeweils mit einem mittleren Teil (22) des Blechstreifens (20) an einem Ende verbunden sind;

eine Zunge (8) wird aus einem Ende jedes flachen Körperteils (23) gestanzt, die mit dem mittleren Teil (22) des Blechstreifens (20) verbunden bleibt; gekennzeichnet durch:

jede Zunge (8) wird progressiv zum mittleren Teil (22) des Blechstreifens (20) gebogen, bis eine Seite (9) der Zunge (8) parallel und im Abstand von einer Seite (25) des flachen Körperteils (23) angeordnet ist, so daß ein sich längs erstreckender Schlitz (27) in Rechteckform in dem flachen Körperteil (23) gebildet wird, wobei die Längsachse des Schlitzes die Zunge (8) schneidet une eine Seite (10) der Zunge (8) eine gekrümmte Widerlagerfläche für einen Hebelarm bildet, die benachbart einem schmalen Ende des Schlitzes (27) angeordnet ist und einen Bereich mit konstantem Radius aufweist;

jedes Körperteil (23) wird vom mittleren Teil (22) des Blechstreifens (20) abgetrennt.

3. Verfahren zur Herstellung eines Widerlagers für einen Hebel nach Anspruch 2, gekennzeichnet durch folgenden weiteren Schritt:

jeder Schlitz (27) wird durch Wegschneiden eines Teils des Körperteils (23) gegenüberliegend einer Zunge (8) vergrößert und bildet einen verlängerten Schlitz in jedem Körperteil (23), der zur Aufnahme eines Hebelarmes angepaßt ist.

4. Verfahren zur Herstellung eines Widerlagers für einen Hebel nach Anspruch 3, gekennzeichnet durch folgenden weiteren Schritt:

das Ende (24) jedes Werkstücks gegenüber dem Ende des Körperteils (23), der mit dem mittleren Teil (22) des Blechstreifens (20) verbunden ist, wird zur Bildung eines zylindrischen Teils (7) gebogen, welches zur Verbindung mit dem Ende eines Kabels geeignet ist.

FIG.1

FIG.2

FIG.3

FIG.4